# EUROPEAN PATENT APPLICATION

(11) **EP 4 790 159 A1**
(43) Date of publication of application: **12.08.2026**
(21) Application number: 24874671.1
(22) Date of filing: 03.10.2024
(51) Int. Cl.: C22B 23/00, C22B 1/00, C22B 1/02, C22B 3/08, C22B 7/00, C22B 23/02, H01M 10/54

(54) **STARTING MATERIAL FOR DRY SMELTING, METHOD FOR PRODUCING STARTING MATERIAL FOR DRY SMELTING, METHOD FOR PRODUCING VALUABLE METAL USING SAID STARTING MATERIAL FOR DRY SMELTING, AND METHOD FOR PRODUCING NICKEL SULFATE AND/OR COBALT SULFATE**

(30) Priority: 03.10.2023 JP 2023171944
(71) Applicant: SUMITOMO METAL MINING CO., LTD., Tokyo 105-8716 (JP)
(72) Inventor: NAGAKURA Toshihiko, Tokyo 105-8716 (JP); KOBAYASHI Hiroshi, Tokyo 105-8716 (JP); KUROMITSU Rio, Tokyo 105-8716 (JP)
(74) Representative: Hirons, Daniel Stuart
(86) International application number: PCT/JP2024/035379
(87) International publication number: WO 2025/075071

(57) **Abstract**

The present invention provides a starting material for dry smelting, with which it is possible to efficiently produce a metal that contains a valuable metal, while suppressing the discharge amount of carbon dioxide. A starting material for dry smelting according to the present invention contains carbon (C) and at least one valuable metal selected from among nickel (Ni) and cobalt (Co), and has a C content of 25% by mass or less and C/(Ni + Co) of 2.5 or less. This starting material for dry smelting can be produced by a method which includes: a step for preparing a starting material that contains carbon and at least one valuable metal selected from among Ni and Co; a first classification step for subjecting the starting material to classification so as to divide the starting material into a coarse grain powder A₁ that contains the valuable metal and a fine grain powder A₂; and a second classification step for subjecting the fine grain powder A₂ to classification so as to divide the fine grain powder into a coarse grain powder B₁ and a fine grain powder B₂. Specifically, the coarse grain powder A₁ and the coarse grain powder B₁ are recovered so as to be used as a starting material for dry smelting.

## Description

### TECHNICAL FIELD

The present invention relates to a starting material for dry smelting, a method for producing a starting material for dry smelting, a method for producing a valuable metal using this starting material for dry smelting, and a method for producing nickel sulfate and/or cobalt sulfate.

### BACKGROUND ART

In recent years, as environmental regulations become stricter, recyclable energy is attracting greater attention. Particularly thereamong, lithium ion batteries are in the spotlight as a light-weight, high-output secondary battery.

General lithium ion batteries have a structure enclosing a negative electrode material, positive electrode material, separator and electrolytic solution within an outer can. For example, the outer can consists of a metal such as aluminum (Al), iron (Fe), etc. The negative electrode material consists of a negative electrode active material (graphite, etc.) fixed to a negative electrode collector (copper foil, etc.). The positive electrode material consists of a positive electrode active material (lithium nickelate, lithium cobaltate, etc.) fixed to a positive electrode collector (aluminum foil, etc.). The separator consists of a porous resin film of polypropylene, etc. The electrolytic solution contains lithium hexafluorophosphate (LiPF₆) or the like.

One of the main applications of lithium ion batteries is hybrid vehicles and electric vehicles. For this reason, in accordance with the life cycle of vehicles, it is expected that a large quantity of the equipped lithium ion batteries will be disposed in the future. In addition, there are also lithium ion batteries disposed as defective products during manufacture. It has been sought to reuse such used batteries and batteries which are defective products generated during manufacture (hereinafter also referred to as "waste lithium ion battery") as a resource.

As a technique for reuse, a dry smelting process that melts the entirety of waste lithium ion batteries in a high-temperature furnace has been proposed. The dry smelting process is a technique that conducts melting treatment on pulverized waste lithium ion batteries, and separates and recovers valuable metals that are the recovery target of which cobalt (Co), nickel (Ni) and copper (Cu) are representative, and metals of low added value of which iron (Fe) and aluminum (Al) are representative, using the difference in oxygen affinity therebetween. With this technique, while the metals of low added value are oxidized to the utmost and made into slag, this oxidation is suppressed to the utmost for valuable metals so as to recover as alloys.

For example, Patent Document 1 discloses a method of recovering valuable metals from waste lithium ion batteries in a dry smelting process. However, the conventional method by a dry smelting process is a method which combusts a large amount of carbon to melt the metal, and reduces the oxidized metal in a strong reducing atmosphere by a large amount of carbon, and thus a great amount of carbon dioxide is emitted accompanying this processing. In addition, there is a possibility of impurities being contained in abundance in the generated alloy consisting of valuable metals (hereinafter also referenced as "valuable metal alloy"), and thus the processing by a wet process at a later stage is complicated, and there is a problem in that the refining cost during valuable metal recovery becomes high.

In addition, Patent Document 2 discloses a method of recovering valuable metals by a process focused on solvent extraction in a wet environment. However, there is a serious problem in still being processing technology by only such a wet smelting process. More specifically, in the leaching treatment using acids such as sulfuric acid in the wet smelting process, since not only the valuable metals, but also the impurities dissolve, the necessity for using a large quantity of acid and neutralizing agent arises. In addition, in order to isolate each metal element, several solvent elution steps become necessary. In this way, with the processing of valuable metal recovery by solely a wet smelting process, there is a problem in that the cost in smelting for recovery becomes very high.

In addition, Patent Document 3 discloses a method of recovering at high yield nickel and cobalt which are magnetic matter, and removing copper which is non-magnetic matter in advance, by performing magnetic selection in advance on a raw material to sort between magnetic matter and non-magnetic matter. However, this method cannot recover copper, which is a valuable metal, and the necessity arises to newly load the reducing agent required for reducing nickel and cobalt oxidized in a subsequent dry smelting step. Furthermore, the slag becomes poorly soluble by loading silicon dioxide, etc. as reducing agent, and the lithium concentration in the slag declines. From such a point, although preferable to use carbon as the reducing agent, it is desired to decrease the amount thereof used from the viewpoint of the carbon dioxide emission amount.

It should be noted that Patent Document 4 discloses a method of roasting and pulverizing waste lithium ion batteries, and separation sorting the valuable metals. In the processed product obtained by processing in this way, it is known that such valuable metals as nickel, cobalt and copper are contained in about 50% by mass, and carbon is contained in about 30% by mass.

### Citation List

### Patent Documents

Patent Document 1: Japanese Unexamined Patent Application Publication No. 2017-526820
Patent Document 2: Japanese Unexamined Patent Application Publication No. 2020-105599
Patent Document 3: Japanese Unexamined Patent Application Publication No. 2022-18616
Patent Document 4: Japanese Unexamined Patent Application Publication No. 2019-171267

### DISCLOSURE OF THE INVENTION

### Problems to be Solved by the Invention

The present invention has been proposed taking consideration of such a conventional situation, and has an object of providing a starting material for dry smelting and a method for producing said starting material for dry smelting that can efficiently produce a metal containing valuable metal, while suppressing the carbon dioxide emission amount, as well as a method for producing valuable metal using said starting material for dry smelting.

### Means for Solving the Problems

The present inventors have given careful consideration to solve the above problem. As a result, it was found that it is possible to efficiently produce a metal containing valuable metal, while suppressing carbon dioxide emissions in a method that reduction-melts a raw material to produce valuable metal contained in this raw material, by focusing on the carbon (C) content of this raw material used (starting material for dry smelting) and the ratio represented by C/(Ni+Co), and these being in specific ranges, thereby arriving at completion of the present invention.
(1) A first aspect of the present invention relates to a starting material for dry smelting, including: at least one type of valuable metal among nickel (Ni) and cobalt (Co), and carbon (C), in which a C content is 25% by mass or less, and C/(Ni+Co) is 2.5 or less.
(2) According to a second aspect of the present invention, in the starting material for dry smelting of the first aspect, an average particle size is 270 µm or more.
(3) According to a third aspect of the present invention, in the starting material for dry smelting of the first or second aspect, the C content is 15% by mass or less.
(4) A fourth aspect of the present invention relates to a method for producing the starting material for dry smelting as described in the first aspect, the method including: a preparation step of preparing a starting material containing at least one valuable metal among nickel (Ni) and cobalt (Co), and carbon (C); a first classification step of conducting classification on the starting material to divide into a coarse grain powder A containing the valuable metal, and a fine grain powder A; and a second classification step of conducting classification on the fine grain powder A to divide into a coarse grain powder B and a fine grain powder B, in which the coarse grain powder A obtained from the first classification step, and the coarse grain powder B obtained from the second classification step are recovered and established as the starting material for dry smelting.
(5) According to a fifth aspect of the present invention, in the method for producing a starting material for dry smelting of the fourth aspect, the first classification step conducts classification with a classification point of 50 µm to 250 µm.
(6) According to a sixth aspect of the present invention, in the method for producing a starting material for dry smelting of the fifth aspect, the second classification step conducts classification with a classification point of 25 µm or more.
(7) A seventh aspect of the present invention relates to a method for producing a valuable metal, the method producing the valuable metal or an alloy containing the valuable metal from a starting material for dry smelting containing valuable metal, the method including: a reduction melting step of reduction melting the starting material for dry smelting, in which the starting material for dry smelting according to claim 1 is used as said starting material for dry smelting.
(8) According to an eighth aspect of the present invention, the method for producing a valuable method of the seventh aspect further includes: further comprising a raw material manufacturing step of manufacturing the starting material for dry smelting from a starting material containing valuable metal, in which the raw material manufacturing step manufactures the starting material for dry smelting by executing the method as described in the fourth aspect, and supplies the starting material for dry smelting thus obtained to the reduction melting step.
(9) According to a ninth aspect of the present invention, in the method for producing a valuable method of the seventh or eighth aspect, the starting material contains detoxified battery powder which is obtained by detoxifying a waste lithium ion battery by combusting, and pulverizing to a predetermined size.
(10) According to a tenth aspect of the present invention, in the method for producing a valuable method of any one of the seventh to ninth aspects, the reduction melting step obtains a reduced melt containing slag and metal containing the valuable metal, by conducting a reduction melting treatment on the starting material for dry smelting in a melting furnace.
(11) An eleventh aspect of the present invention relates to a method for producing nickel sulfate and/or cobalt sulfate using the starting material for dry smelting according to claim 1, the method including: a dry treatment step of producing the valuable metal or an alloy containing the valuable metal by a dry treatment process using the starting material for dry smelting; and a wet treatment step of producing nickel sulfate and/or cobalt sulfate through a wet treatment process including a leaching treatment using sulfuric acid, from the valuable metal or the alloy containing the valuable metal obtained in the dry treatment step.
(12) According to a twelfth aspect of the present invention, in the method for producing nickel sulfate and/or cobalt sulfate of the eleventh aspect, the starting material for dry smelting contains nickel (Ni) and cobalt (Co), and a mixed aqueous solution of nickel sulfate and cobalt sulfate is produced through the wet treatment process of the wet treatment step.
(13) According to a thirteenth aspect of the present invention, in the method for producing nickel sulfate and/or cobalt sulfate of the eleventh or twelfth aspect, in the dry treatment step, a reduced material containing slag and metal including the valuable metal is obtained by conducting reduction melting treatment on the starting material for dry smelting in a melting furnace, and the valuable metal or an alloy containing the valuable metal is obtained by separating the slag from the reduced material.

### Effects of the Invention

According to the present invention, it is possible to provide a starting material for dry smelting and a method for producing said starting material for dry smelting that can efficiently produce a metal containing valuable metal, while suppressing the carbon dioxide emission amount, as well as a method for producing valuable metal using said starting material for dry smelting.

### BRIEF DESCRIPTION OF THE DRAWINGS

FIG. 1 is a process diagram showing an example of the flow of a method for producing a starting material for dry smelting; and
FIG. 2 is a process diagram showing an example of the flow of a method for producing a valuable metal.

### PREFERRED MODE FOR CARRYING OUT THE INVENTION

Hereinafter, a specific embodiment (hereinafter referred to as "present embodiment") of the present invention will be described in detail. It should be noted that the present invention is not to be limited to the following embodiment, and various modifications thereto are possible within a scope not changing the gist of the present invention.

### <<1. Starting Material for Dry Smelting>>

### (1) Regarding starting material for dry smelting

The starting material for dry smelting according to the present embodiment contains a valuable metal, and is a processing raw material of a smelting process that produces the value material contained in this raw material by being provided to a dry treatment such as reduction melting treatment, for example.

Specifically, the starting material for dry smelting includes at least one type of valuable metal among nickel (Ni) and cobalt (Co), and carbon (C). In addition, this starting material for dry smelting has a C content of 25% by mass or less, and C/(Ni+Co) is 2.5 or less.

According to such a starting material for dry smelting, it is possible to curb to a small emission amount of carbon dioxide generating upon conducting dry treatments such as reduction melting treatment or oxidation roasting treatment. In addition, by the ratio represented by C/(Ni+Co) being 2.5 or less, it is possible to effectively reduce the valuable metals such as nickel and cobalt by a dry treatment, and it is possible to suppress a decline in the production yield of valuable metal by preventing these valuable metals from being distributed in the slag as oxides.

The ratio represented by C/(Ni+Co) is preferably 1.0 or less, more preferably 0.8 or less, and even more preferably 0.6 or less. In particular, by the ratio of C/(Ni+Co) being 0.6 or less, it is possible to more effectively reduce the valuable metals such as nickel and cobalt, and possible to curb reduction of impure metals that are not the recovery target, which leads to a workload decrease in wet treatment process after the dry treatment process, for example.

It should be noted that the lower limit value for the ratio represented by C/(Ni+Co) is preferably 0.2 or more. By this ratio being 0.2 or more, it is possible to prevent the reduction of valuable metals such as nickel and cobalt from becoming insufficient.

The content of carbon (C) is 25% by mass or less, as described above. It is thereby possible to curb to a small emission amount of carbon dioxide generated upon conducting dry treatments such as reduction melting treatment and oxidation roasting treatment. In addition, the C content is preferably 20% by mass or less, and more preferably 15% by mass or less.

It should be noted that the lower limit value for the C content is preferably 2% by mass or more. By the C content being 2% by mass or more, it is possible to prevent the reduction of value metals such as nickel and cobalt from becoming insufficient.

The starting material for dry smelting may contain other metal elements other than the aforementioned valuable metals. For example, as the other metal elements, iron (Fe), aluminum (Al), etc. can be exemplified. However, the Fe content in the starting material for dry smelting is preferably 2% by mass or less. In addition, the Al content in the starting material for dry smelting is preferably 1% by mass or less. By the Fe content and Al content preferably being in the aforementioned ranges, it is possible to curb slag from excessively generating through the dry treatment process.

Herein, the starting material for dry smelting preferably has an average particle size of 270 µm or more. It should be noted that, in the present disclosure, the average particle size indicates the average particle size when measuring 1,000 powder particles using a laser light diffraction/scattering particle size distribution analyzer (model LA950V2) manufactured by Horiba.

Although described later in detail, the starting material for dry smelting according to the present embodiment is obtained establishing a raw material containing waste lithium ion battery as a starting material, for example, and can be produced by pulverizing this waste lithium ion battery and heating to deactivate, followed by performing predetermined classification processing. The starting material for dry smelting is constituted by coarse grain powder (powder of larger grain size) after separating into coarse grain powder and fine grain powder through this classification processing. Such coarse grain powder abundantly contains the value metal, and the content of carbon (C) which is easily refined by pulverizing is small.

Based on this, in the preferred starting material for dry smelting having an average particle size of 270 µm or more stably satisfies the aforementioned composition, i.e. relationship of C concentration of 25% by mass or less, and C/(Ni+Co) of 2.5 or less.

It should be noted that the content of metal component in the present disclosure is a numerical value as a result of measuring by an ICP optical emission spectrometer (model ICP-OES Agilent 5900 manufactured by Agilent Technologies, Inc.). In addition, the content of carbon (C) is a numerical value as a result of measuring by a carbon and sulfur analyzer (model CS844) manufactured by LECO Corp.

### (2) Regarding method for producing starting material for dry smelting

The starting material for dry smelting having the aforementioned characteristic composition can be produced by the following method.

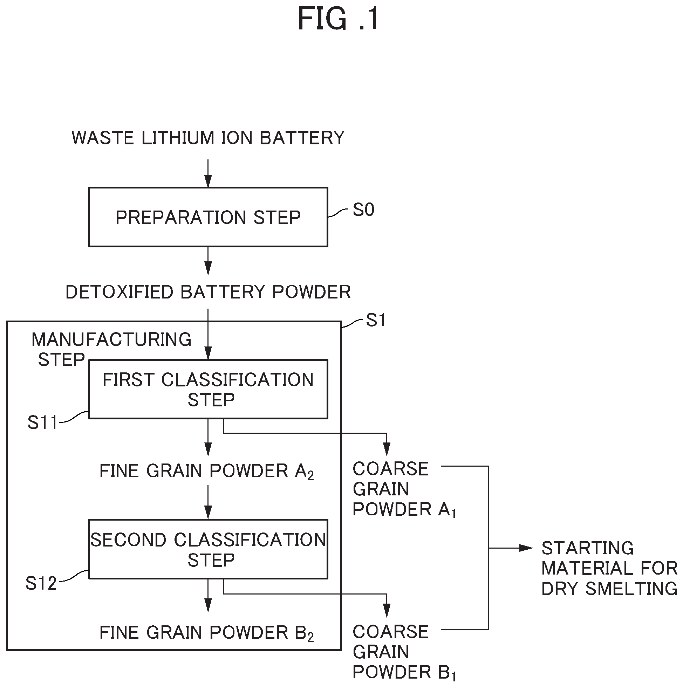

FIG. 1 is a process diagram showing an example of the flow of a method for producing the starting material for dry smelting according to the present embodiment. The method for producing the starting material for dry smelting is configured from a preparation step S0 of preparing a starting material containing at least one type of value metal among nickel (Ni) and cobalt (Co), and carbon (C), and a manufacturing step S1 of manufacturing (producing) the starting material for dry smelting from the starting material.

In addition, the manufacturing step S1 of manufacturing the starting material for dry smelting includes: a first classification step S11 of conducting classification on the starting material to separate into coarse grain powder A₁ containing valuable metal, and fine grain powder A₂, and second classification step S12 of conducting classification on the obtained fine grain powder A₂ to separate into coarse grain powder B₁ and fine grain powder B₂. Then, in the manufacturing step S1, the coarse grain powder A₁ obtained from the first classification step S11, and the coarse grain powder B₁ obtained from the second classification step S12 are collected to make the starting material for dry smelting.

### (2-1) Preparation step

In the preparation step S0, a starting material containing at least one type of valuable metal among nickel (Ni) and cobalt (Co), and carbon (C) is prepared.

The starting material is not particularly limited so long as being a raw material containing at least one type of valuable metal among nickel and cobalt, and carbon, and a raw material containing waste lithium ion batteries can be exemplified. Waste lithium ion batteries refer to used batteries and defective batteries arising in battery manufacture. Such waste lithium ion batteries contain valuable metals such as nickel and cobalt as components constituting the positive electrode material, and also contain copper (Cu) as a valuable metal. In addition, the waste lithium ion batteries contain carbon as a component constituting the negative electrode material, etc.

The starting material can be exemplified by waste lithium ion batteries or the like as mentioned above, and includes at least one type of valuable metal among nickel and cobalt. The total content of nickel and cobalt in the starting material is not particularly limited; however, it is preferably 10% by mass or more, and more preferably 15% by mass or more. By producing the starting material for dry smelting from a starting material containing valuable metal in such amounts, and subjecting to a recovery process such as a dry treatment process using this starting material for dry smelting, it is possible to effectively recover valuable metals.

It should be noted that the starting material is not limited to waste lithium ion batteries, and the waste matter such as of electronic components containing valuable metals such as nickel and cobalt, ore or the like can be established as the target. In addition, the valuable metal in the starting material may exist in the form of a compound such as an oxide, or may exist in the form of an alloy. In addition, the starting material may contain organic matter or inorganic matter other than those mentioned above. Furthermore, the shape of the starting material is not particularly limited, and may be particle shape or another shape.

For example, in the case of establishing a raw material containing waste lithium ion batteries as the starting material, the preparation step S0 detoxifies by combusting the waste lithium ion batteries constituting the starting material to produce detoxified battery powder which has been pulverized to a predetermined size. Since the waste lithium ion batteries consist of a closed system structure, and have an electrolytic solution inside thereof, if performing the pulverizing process in this state as is, there is risk of explosion, and thus is dangerous. Therefore, it is preferable to conduct processing of detoxification that removes the electrolytic solution, or deactivates by some method. The detoxification processing, for example, can be performed by combusting the waste lithium ion batteries.

After conducting the detoxification processing on the waste lithium ion batteries, the batteries are pulverized to small pieces, and made into powder with a particle size of several mm or less (detoxified battery powder) by a classification process such as sieving. By classifying and recovering the powder of several mm or less by sieving or the like, it is possible to make a starting material in which excess iron (Fe) or aluminum (Al) is decreased. In the dry treatment process, since the metal components such as iron and aluminum contained in the raw material are oxidized and distributed in the slag, the contents of these components is preferably smaller from the raw material stage. The classification point in the processing such as sieving of the preparation step S0 is not particularly limited; however, it is preferably set to on the order of 3.0 mm, more preferably set to on the order of 2.4 mm, and even more preferably set to on the order of 1.0 mm.

### (2-2) Manufacturing step

THE manufacturing step S1 is a step of manufacturing (producing) the starting material for dry smelting from the prepared starting material. As shown in FIG. 1, the manufacturing step S1 includes: a first classification step S11 of conducting classification on the starting material to separate into coarse grain powder A₁ containing valuable metal, and fine grain powder A₂, and a second classification step S12 of conducting classification on the obtained fine grain powder A₂ to separate into coarse grain powder B₁ and fine grain powder B₂.

Then, in the manufacturing step S1, the coarse grain powder A₁ obtained from the first classification step S11, and the coarse grain powder B₁ obtained from the second classification step S12 are collected to make the starting material for dry smelting.

The starting material for dry smelting obtained in this way contains at least one type of valuable metal among nickel (Ni) and cobalt (Co), and carbon (C), in which the C content is 25% by mass or less, and C/(Ni+Co) is 2.5 or less. Therefore, according to the method for producing a starting material for dry smelting according to the present embodiment, it is possible to produce a starting material for dry smelting capable of decreasing the emission amount of carbon dioxide generating upon conducting a dry treatment such as a reduction melting treatment or oxidation roasting treatment. In addition, it is possible to effectively reduce the valuable metals such as nickel and cobalt by a dry treatment, and possible to prevent these valuable metals from being distributed in the slag as oxide, and thus produce a starting material for dry smelting capable of suppressing a decline in production yield of valuable metals.

It should be noted that the particle size of the powder recovered from the classification processing is based on the classification point in the classification processing, and it is unnecessary for the particle size of this powder to be a predetermined value. The particle size control of the powder indicates control of the classification point in each classification processing.

### (First classification step)

In the first classification step S11, by conducting classification processing with a predetermined classification point (first classification point) on the starting material prepared in the preparation step S0, divides into the coarse grain powder A₁ containing valuable metal and the fine grain powder A₂.

The method of the classification processing is not particularly limited, and methods using vibrating sieves, multistage vibrating sieves, dry cyclones, wet vibrating tables, air tables, elbow jet classifiers, aero fine classifiers, dry fine powder classifiers, hydrocyclones, concentrators, gravity separators, laboratory mineral separators and the like can be exemplified. Thereamong, methods using a vibrating sieve capable of inexpensive processing and easy to operate are preferable.

The classification point (first classification point) in the classification processing of the first classification step S11 is not particularly limited, and can be appropriately designed according to the composition of the starting material. More specifically, for example, it is preferable to set the classification point in a range of 50 µm to 250 µm, a range of 50 µm to 150 µm is more preferably, and a range of 75 µm to 100 µm is even more preferable. By setting the first classification point to the range of 50 µm to 250 µm, it is possible to effectively recover the coarse grain powder A₁ containing valuable metals of nickel and cobalt, and improve the yield, as well as efficiently separate the fine grain powder A₂ containing carbon. In addition, it is possible to improve the accuracy of the classification processing in the second classification step S12, which is the subsequent step.

In the classification processing of the first classification step S11, the coarse grain powder A₁ obtained above the classification point (i.e. oversieve) is used as the starting material for dry smelting thereafter. On the other hand, the fine grain powder A₂ obtained below the classification point (i.e. undersieve) is transferred to the second classification step S12 to perform classification again.

Herein, as the coarse grain powder A₁, the (Ni+Co) concentration which are the valuable metals (total concentration of nickel and cobalt as valuable metals) is preferably 40% by mass or more.

### (Second classification step)

In the second classification step S12, classification processing is conducted again with a predetermined classification point (second classification point) on the fine grain powder A₂ obtained below the classification point in the classification processing of the first classification step S11. It is thereby divided into coarse grain powder B₁ and fine grain powder B₂.

The method of the classification processing is not particularly limited, and methods using vibrating sieves, multistage vibrating sieves, dry cyclones, wet vibrating tables, air tables, elbow jet classifiers, aero fine classifiers, dry fine powder classifiers, hydrocyclones, concentrators, gravity separators, laboratory mineral separators and the like can be exemplified. Thereamong, it is possible to more effectively and efficiently perform removal of the fine carbon by methods using an elbow jet or dry cyclone, and thus preferred.

The classification point (second classification point) in the classification processing of the second classification step S12 is not particularly limited, and can be appropriately designed according to the starting material composition, processing result of the first classification step, and composition of the fine grain powder A₂. More specifically, for example, it is preferable to set the classification point at 25 µm or more, and more preferable to set at 30 µm or more. By setting the second classification point at 25 µm or more, it is possible to improve the quality of the valuable metal such nickel and cobalt in the coarse grain powder B₁ obtained by separation, as well as being able to suppress contamination of carbon (C) into this coarse grain powder B₁.

In the classification processing of the second classification step S12, the coarse grain powder B₁ obtained above the classification point (i.e. sieve top) is subsequently used as the starting material for dry smelting. It should be noted that this coarse grain powder B₁ may be used as the starting material for dry smelting by mixing with the coarse grain powder A₁ recovered in the first classification step S11, or can be used as the starting material for dry smelting independently.

On the other hand, the fine grain powder B₂ obtained below the classification point (i.e. undersieve) relatively abundantly contains carbon, and thus is somewhat unpreferred as the starting material for dry smelting. However, magnetic separation processing may be performed on this fine grain powder B₂, and may be used as the starting material for dry smelting by recovering the magnetic substances nickel and/or cobalt (valuable metals remaining in fine grain powder B₂). In addition, since lithium which is a valuable metal may exist at several percent in the fine grain powder B₂, it may be configured to recover lithium by acid leaching this fine grain powder B₂. Furthermore, since the fine grain powder B₂ has a high carbon (C) concentration as mentioned above, it is possible to effectively use separately as a heat source or reducing agent.

It should be noted that the magnetic separation processing on the fine grain powder B₂ can be performed by a known method such as a contact method or non-contact method using permanent magnets or electromagnets. As a magnetic separator used in the processing, a drum-type magnetic separator, counter-electrode type magnetic separator or the like can be exemplified. Regarding the processing conditions such as the magnetic flux density and partition position, it is possible to appropriately design according to the raw material (fine grain powder B₂). In addition, the magnetic separation processing may be performed in only one stage, or performed in multiple stages. By processing in multiple stages of two times or more, it is possible to effectively remove carbon and concentrate the valuable metals.

Powders of valuable metals such as nickel and cobalt recovered in such a magnetic separation processing can be effectively used as the starting material for dry smelting, similarly to the coarse grain powder A₁ and coarse grain powder B₁. It should be noted that, although carbon has no magnetism and thus does not magnetize by the magnetic separation processing, it may adjoin to the nickel and cobalt, and mix into the magnetic substance in trace amounts. However, even if the carbon mixes into the magnetized substances, it will be on the order of 10% by mass at most, and thus there are no problems even if mixing with the starting material for dry smelting (coarse grain powder A₁, coarse grain powder B₁).

### <<2. Method for Producing Valuable Metal by Dry Treatment Process>>

Next, a method for producing valuable metals by a dry treatment process (dry smelting process) using the aforementioned starting material for dry smelting will be described.

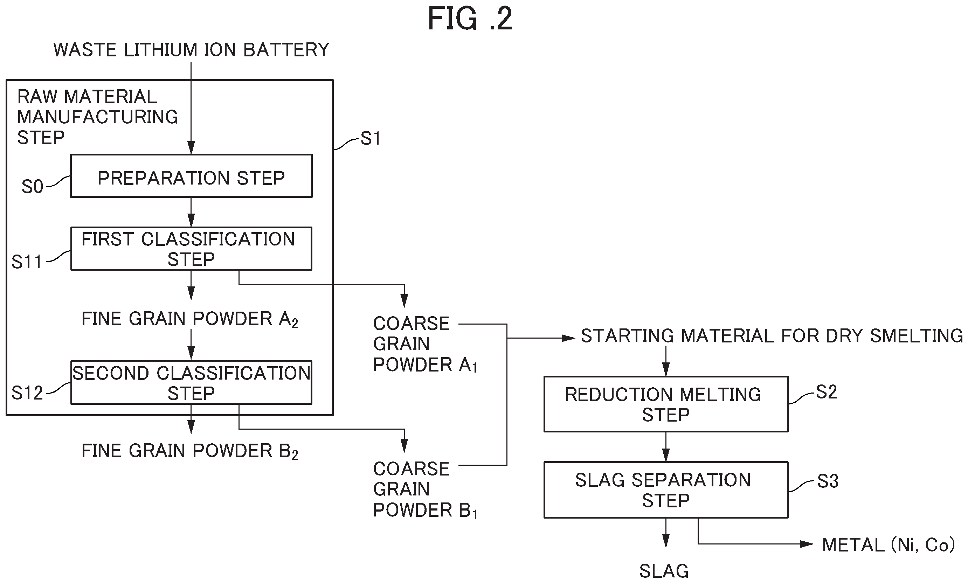

FIG. 2 is a process diagram showing an example of the flow of the method for producing a valuable metal according to the present embodiment. The method for producing a valuable metal is a method for producing the valuable metal or an alloy consisting of this valuable metal (valuable metal alloy), from the starting material for dry smelting containing the valuable metal. The valuable metal is at least one type among nickel (Ni) and cobalt (Co).

More specifically, the method for producing a valuable metal includes a reduction melting step S2 of reduction melting the starting material for dry smelting. In the reduction melting step S2, a reduction melting treatment is conducted on the starting material for dry smelting in a melting furnace, whereby a reduced material (reduced melt) containing slag and metal including the valuable metal is obtained. Subsequently, in the slag separation step S3, the valuable metal or alloy consisting of the valuable metal is recovered by separating the slag from the obtained reduced material.

In addition, as shown in the process diagram of FIG. 2, in the method for producing a valuable metal, it is possible to manufacture a starting material for dry smelting through a raw material manufacturing step S1 of manufacturing the start material for dry smelting from a starting material containing valuable metal.

Herein, the method for producing a valuable metal according to the present embodiment is characterized by using the starting material for dry smelting described in detail above, as the starting material for dry smelting provided to the processing in the reduction melting step S2, which is a dry treatment process. In other words, the starting material for dry smelting supplied to the processing of the reduction melting step S2 contains at least one valuable metal among nickel (Ni) and cobalt (Co), and carbon (C), in which the C content is 25% by mass or less, and C/(Ni+Co) is 2.5 or less.

Therefore, according to the method for producing a valuable metal using such a starting material for dry smelting, it is possible to curb to a small emission amount of carbon dioxide generated upon conducting a dry treatment such as the reduction melting treatment. In addition, it is possible to effectively reduce the valuable metal such as nickel or cobalt by dry treatment, and it is possible to suppress a decline in the production yield of valuable metal by preventing these valuable metals from being distributed in the slag as oxides.

### (1) Raw material preparation step

As mentioned above, the starting material for dry smelting described in detail above is used as the starting material for dry smelting supplied to the processing of the reduction melting step S2. Consequently, the processing in this raw material manufacturing step S1 corresponds to the method for producing the aforementioned starting material for dry smelting described above. It should be noted that, for this reason, the step reference symbol of the manufacturing step S1 in the aforementioned method for producing a starting material for dry smelting, and this raw material manufacturing step S1 are both noted as "S1", and detailed descriptions are omitted.

The raw material manufacturing step S1 is configured from a preparation step S0 of preparing a starting material containing at least one valuable metal selected from nickel (Ni) and cobalt (Co), and carbon (C); and a manufacturing step S1 of manufacturing (producing) the starting material for dry smelting from this starting material. In addition, the manufacturing step S1 includes: a first classification step S11 of conducting classification processing on the starting material to divide into coarse grain powder A₁ containing the valuable metal, and fine grain powder A₂, and a second classification step S12 of conducting classification processing on the fine grain powder A₂ to divide into coarse grain powder B₁ and fine grain powder B₂.

Then, in the raw material manufacturing step S1, the coarse grain powder A₁ obtained from the first classification step S11, and the coarse grain powder B₁ obtained from the second classification step S12 are recovered and established as the starting material for dry smelting.

It should be noted that, as the starting material, waste lithium ion batteries containing at least one valuable metal among nickel (Ni) and cobalt (Co) can be exemplified. In the case of using waste lithium ion batteries, these batteries are detoxified by combustion to prepare detoxified battery powder pulverized to a predetermined size, and this is supplied to classification processing (first classification step S11, second classification step S12).

### (2) Reduction melting step

In the reduction melting step S2, the starting material for dry smelting is loaded into a melting furnace and reduction melting treated. A reduced material (reduced melt) containing slag and metal including the valuable metal is thereby obtained. In other words, the reduction melting step S2 is a step of performing a dry treatment process.

More specifically, in the reduction melting treatment of the reduction melting step S2, the metal oxides, etc. are reduced by heating and melting the starting material for dry smelting at high temperature. Nickel oxide and/or cobalt oxide are reduced to form a metal (mixed metal) and discharged to generate the valuable metal or an alloy consisting of this valuable metal (valuable metal alloy). In addition, in the reduction melting treatment, the impurity metal elements that are not valuable metals are separated from the valuable metals as slag in the form of oxides without being reduced. In this way, in the reduction melting treatment, while maintaining the metals of low added value as oxides, the valuable metals (Ni, Co, etc.) are reduced and melted to be recovered as metal.

Herein, carbon (C) is a very preferable reducing agent to reduce nickel (Ni) and cobalt (Co) as the valuable metals that are the recovery target and, for example, 2 moles of oxides of the valuable metal can be reduced with 1 mole of carbon. The metals reduced by carbon affect the affinity between each metal and oxygen, and generally, aluminum (Al), lithium (Li), carbon (C), manganese (Mn), phosphorus (P), iron (Fe), cobalt (Co), nickel (Ni) and copper (Cu) are reduced in the order of Al<Li<C<Mn<P<Fe<Co<Ni<Cu generally. In other words, by controlling the carbon amount, it is preferentially reduced starting from the valuable metals (Ni, Co, etc.).

However, the emission amount of carbon dioxide emitted from within the system through the processing becomes greater as the carbon amount supplied to reduction melting treatment becomes larger. On the other hand, if the carbon amount is small, it will not be possible to effectively reduce the oxides of valuable metals as described above, which makes it difficult to effectively recover as a metal.

In this regard, the present embodiment is characterized in utilizing a starting material for drying smelting containing at least one valuable metal among nickel (Ni) and cobalt (Co), and carbon (C), in which the C content is 25% by mass or less, and C/(Ni+Co) is 2.5 or less, as the starting material for dry smelting. According to such a starting material for dry smelting, it is possible to perform processing with a reduced emission amount of carbon dioxide, and effectively reduce oxides of the valuable metals due to satisfying the relationship of C/(Ni+Co) being 2.5 or less.

The heating temperature in the reduction melting treatment is not particularly limited; however, it is preferably in the range of 1300°C to 1550°C, and more preferably in the range of 1350°C to 1450°C. At a heating temperature exceeding 1550°C, thermal energy is wastefully consumed, and the consumption of refractory materials of the melting furnace increases, and the productivity may decline. On the other hand, at a heating temperature less than 1300°C, the separation property between the slag and metal deteriorates, and thus the recovery rate may decline.

The furnace (melting furnace) used in the reduction melting treatment is not particularly limited. As the melting furnace, for example, a submerged arc furnace, arc furnace, and induction furnace can be exemplified.

In the reduction melting treatment, flux may be added for decreasing the melting point of the slag. As the flux, calcium oxide, calcium carbonate, etc. can be exemplified. The flux may be supplied by placing in the melting furnace in which the starting material for dry smelting is loaded, or may be configured to be supplied by mixing into the starting material for dry smelting.

In addition, in the reduction melting treatment, in a case of the degree of reduction being excessive, and impurity metals also being reduced and distributed in the metal that is the valuable metal, an oxidizing agent may be supplied to adjust the degree of oxidation. The adjustment of the degree of oxidation can be appropriately carried out by a known method. For example, a technique that blows the oxidizing agent such as oxygen to the melt generated by the reduction melting treatment is exemplified. More specifically, the oxidation treatment is performed by inserting a tube (lance) made of metal into the melt, and blowing in the oxidizing agent by bubbling. It should be noted that the oxidizing agent in this case can employ gases containing oxygen such as air, pure oxygen, or oxygen-enriched gases.

It should be noted that, in the method for producing a valuable metal, an oxidation roasting step can be provided that oxidation roasts a part or the entirety of the starting material for dry smelting, prior to the treatment in the reduction melting step S2, as necessary. In this way, by performing the treatment of oxidation roasting by providing the oxidation roasting step, it is possible to curb variation in oxidation of metal elements contained in the starting material for dry smelting.

In the oxidation roasting step, it is preferable to treat (oxidation roasting treat) at an degree of oxidation capable of oxidizing low value metals (Al, etc.) contained in the starting material for dry smelting. On the other hand, by adjusting the processing temperature, time and/or environment of oxidation roasting, it is possible to easily control the degree of oxidation.

Adjustment of the degree of oxidation is performed as follows. Specifically, aluminum (Al), lithium (Li), carbon (C), manganese (Mn), phosphorus (P), iron (Fe), cobalt (Co), nickel (Ni) and copper (Cu) are generally oxidized in the order of Al>Li>C>Mn>P>Fe>Co>Ni>Cu. In the oxidation roasting treatment, oxidation is made to advance until the total amount of aluminum contained in the starting material for dry smelting is oxidized. Although oxidation may be promoted until part of the iron is oxidized, it is preferable to stop the degree of oxidation at an extent where cobalt is not oxidized and distributed in the slag.

The oxidizing agent used in the oxidation roasting treatment is not particularly limited; however, an oxygen-containing gas (air, pure oxygen, oxygen-enriched gas, etc.) is preferred. In addition, the supplied amount of oxidizing agent, for example, is preferably 1.2 times or more the chemical equivalent required in oxidation of each substance that is the target of the oxidation treatment.

The heating temperature of the oxidation roasting treatment is not particularly limited; however, it is preferably 600°C or higher, and more preferably 700°C or higher. By establishing such a heating temperature, it is possible to shorten the heating time. In addition, the heating temperature is preferably 900°C or lower, and it is thereby possible to decrease the thermal energy cost, and possible to raise the efficiency of the oxidation roasting treatment.

The oxidation roasting treatment can be performed using a known roasting furnace. In addition, the same furnace as the melting furnace used in the treatment of the reduction melting step S2 described layer may be used; however, it is more preferable to perform the oxidation roasting treatment using a different furnace (preliminary furnace). The furnace used in the oxidation roasting treatment (oxidation roasting furnace) can adopt any format so long as being a furnace capable of performing the oxidation treatment inside thereof by supplying an oxidizing agent (oxygen, etc.) while roasting the charging materials. For example, a rotary kiln, tunnel kiln (hearth furnace) or fluidized bed roasting oven can be exemplified.

### (4) Slag separation step

The slag separation step S3 is a step separating the slag from the reduced material (reduced melt) obtained through the reduction melting step S2, and recovering the valuable metal or an alloy consisting of the valuable metal (valuable metal alloy). Slag and metal differ in specific gravity, and since a slag having smaller specific gravity compared to the metal collects at the top of the metal in the melting furnace, it is possible to separate and recover metal from the slag efficiently by specific gravity separation.

### <<3. Recovery Method of Valuable Metal by Wet Treatment Process>>

The metal containing valuable metal obtained through the aforementioned dry treatment process, for example, is an alloy containing nickel (Ni) and cobalt (Co). In addition, for example, in the case of using waste lithium ion batteries as the starting material, and executing a dry treatment process using the starting material for dry smelting manufactured from this starting material, it is possible to obtain an alloy (Ni-Co-Cu alloy) containing copper (Cu) as a valuable metal in addition to the nickel (Ni) and cobalt (Co). By supplying such an alloy to a wet treatment process (wet smelting process), it is possible to separate, refine and recover each of the value metals.

The wet treatment process on the alloy is performed by a leaching treatment using an acid such as sulfuric acid, solvent extraction treatment to extract specific impurity elements or valuable metal elements, liquid purification treatment to purify a solution containing the valuable metals by oxidization treatment and/or neutralization treatment, or the like. The leaching treatment, solvent extraction treatment, liquid purification treatment, etc. can be performed by known methods. By subjecting to such a wet treatment process, it is possible to purify, concentration, separate and recover the valuable metal which is the recovery target.

For example, by adding sulfuric acid to the alloy (Ni-Co-Cu alloy) to leach the nickel (Ni) and cobalt (Co) from this alloy, it is possible to produce a sulfate aqueous solution of nickel and cobalt.

Therefore, based on this, it is possible to define a method that produces a nickel sulfate aqueous solution and/or cobalt sulfate aqueous solution using the starting material for dry smelting described in detail above. More specifically, it is possible to define a production method for nickel sulfate and/or cobalt sulfate including: a dry processing step (step of dry treatment process) of producing the valuable metal or alloy containing this valuable metal by a dry treatment process using the starting material for dry smelting; and a wet processing step (step of wet treatment process) of producing nickel sulfate and/or cobalt sulfate from the valuable metal or alloy containing this valuable metal obtained in the dry processing step, through a wet treatment process including a leaching treatment using sulfuric acid.

It should be noted that nickel sulfate and/or cobalt sulfate produced by the production method for nickel sulfate and/or cobalt sulfate is a concept including either form among an aqueous solution form and solid form.

The method of the leaching treatment by acid is not particularly limited and can be performed by a known method. For example, using a strong acid such as hydrochloric acid, sulfuric acid and nitric acid individually or by mixing, such an acid solution is added to the alloy (alloy powder) and the pH is controlled to the range of 0.8 to 2.0 to perform the treatment. As mentioned above, among the acids, in the case of realizing so-called "battery-to-battery", which is an ideal circulation method of recycling waste lithium ion batteries and supplying in lithium ion battery raw materials again, it is preferable to use acids containing sulfuric acid. By using sulfuric acid as the acid, it is possible to obtain leachate in the form of sulfates (nickel sulfate, cobalt sulfate) which are easily employed in the positive electrode material of lithium ion batteries.

The amount of acid used in the leaching treatment is set to an amount of 1 equivalent or more, preferably 1.2 equivalents or more, and more preferably to the range of 1.2 equivalents to 11 equivalents, relative to the total amount of nickel and/or cobalt contained in the alloy. By raising the acid concentration, it is possible to increase the rate of the leaching reaction. It should be noted, as a specific example, it is preferable to use an amount of 1.2 equivalents to 2 equivalents to adjust the amount of acid so as to make a pH of 0.8 or more.

In addition, in the leaching treatment, prior to bringing the valuable metal or the alloy containing this valuable metal into contact with acid, or simultaneously with bringing the acid into contact with the valuable metal, it is preferably to add a sulfidizing agent, and conduct the leaching treatment under conditions with this sulfidizing agent coexisting. For example, in the case of establishing an Ni-Co-Cu alloy as the processing target, or the like, by conducting the leaching treatment under the coexistence of a sulfidizing agent in this way, it is possible to efficiently solidify copper as a solid of a sulfide, and it is possible to effectively separate the leachate produced by dissolving nickel and/or cobalt, and the leaching residue mainly containing copper sulfide.

It should be noted that, as the sulfidizing agent, it is possible to use a known agent such as solid sulfur (S), sodium hydrosulfide, and hydrogen sulfide. In addition, the added amount of sulfidizing agent is preferably at least the equivalents required to sulfurize the copper contained in the alloy (1 equivalent or more), and more preferably 1.2 equivalents or more.

In addition, in the leaching treatment on a Ni-Co-Cu alloy, for example, prior to the leaching treatment, at least part of the Ni-Co-Cu alloy may be sulfurized. The copper (Cu) is easily sulfurized compared to nickel (Ni) and cobalt (Co), and preferentially becomes copper sulfide. For this reason, by sulfurizing part of the Ni-Co-Cu alloy, a mixture of copper sulfide and Ni-Co alloy is obtained. Copper is thereby fixed as a solid, and it is possible to selectively leach nickel and cobalt in the acid. For this reason, by conducting sulfurization processing first on the Ni-Co-Cu alloy, it becomes possible to more efficiently leach the nickel and cobalt into the acid. It should be noted that the sulfurization technique is not particularly limited, and methods that introduce a sulfur-containing substance such as solid sulfur (S) and hydrogen sulfide (H₂S) to the alloy can be exemplified.

Upon performing leaching treatment, it is preferable to pulverize the alloy to a predetermined size in advance. By pulverizing, the specific surface area of the alloy becomes large, and it is possible to enhance the leaching efficiency. The pulverizing treatment is not particularly limited, and it is possible to perform using a known pulverizer such as a ball mill, rod mill or disk mill. Alternatively, it may be configured so as to pulverize the alloy to prepare an atomized powder by a method such as gas atomization or water atomization, and supply this to the leaching treatment.

By conducting the leaching treatment with sulfuric acid on the valuable metal or alloy containing this valuable metal in this way, it is possible to produce an aqueous solution of nickel sulfate and/or cobalt sulfate. For example, in the case of conducting the leaching treatment on an alloy containing nickel and cobalt obtained through a dry treatment process from a starting material for dry smelting containing nickel and cobalt, it is possible to produce a mixed aqueous solution of nickel sulfate and cobalt sulfate.

Subsequently, it is possible to conduct a solution purification treatment including a neutralization treatment, or a solvent extraction treatment on the obtained leachate containing the nickel and/or cobalt. It is thereby possible to separate and remove impurity elements, and possible to obtain an aqueous solution concentrating the nickel and/or cobalt.

More specifically, by conducting solution purification treatment on the mixed aqueous solution of nickel sulfate and cobalt sulfate obtained through the leaching treatment, for example, it is possible to remove the impurity elements such as iron (Fe) and zinc (Zn) in the aqueous solution, and make a mixed aqueous solution of nickel sulfate and cobalt sulfate concentrating the nickel and cobalt. In addition, by conducting solvent extraction treatment using a predetermined extracting agent on the mixed aqueous solution after solution purification treatment, it is possible to further concentrate the nickel and cobalt.

It should be noted that, thereafter, from the aqueous solution of nickel sulfate and/or cobalt sulfate, it is possible to establish the nickel sulfate and/or cobalt surface in solid form by a known method.

### EXAMPLES

Although the present invention is more specifically described by showing Examples hereinafter, the present invention is not in any way to be limited to the following Examples.

### (Preparation step)

The waste lithium ion batteries containing nickel (Ni) and cobalt (Co) as valuable metals were detoxification roasted and pulverized, followed by sieve processing the pulverized material at the classification point of 1 mm. An obtained black mass as the undersieve material was collected and established as the starting material.

### (Manufacturing step)

From the black mass as the starting material, a starting material for dry smelting processed as follows was manufactured. More specifically, first, a first classification processing was conducted on the starting material with the classification point (first classification point) shown in Table 1 below to divide into coarse grain powder A (oversieve material) and fine grain powder A (undersieve material).

Next, second classification was conducted on the recovered fine grain powder A with the classification point (second classification point) shown in Table 1 below to divide into coarse grain powder B (oversieve material) and fine grain powder B (undersieve material).

The coarse grain powder A and coarse grain powder B obtained through such processing of the manufacturing step were mixed and established as the starting material for dry smelting.

The carbon (C) content and ratio represented by C/(Ni+Co) were measured for the starting materials for dry smelting used in each of the Examples and Comparative Examples. In addition, the average particle size of these starting materials for dry smelting were also measured. The measurement results are collectively shown in Table 1 below.

It should be noted that the content of metal components were measured with an ICP optical emission spectrometer (model ICP-OES Agilent 5900 manufactured by Agilent Technologies, Inc.). In addition, the content of carbon was measured by a carbon and sulfur analyzer (model CS844) manufactured by LECO Corp. In addition, the average particle size indicates the average particle size when measuring 1,000 powder particles using a laser light diffraction/scattering particle size distribution analyzer (model LA950V2) manufactured by Horiba.

### (Dry treatment process)

Next, using the obtained starting material for dry smelting, the dry treatment process for producing valuable metal was executed. More specifically, the starting material for dry smelting was loaded into a submerged arc furnace, heated and melted at a temperature condition of 1400°C, and the reduction melting treatment for reducing oxides of the valuable metal was performed. By this reduction melting treatment, a reduced melt containing slag consisting of oxides of impurity elements, and alloys of nickel and cobalt was obtained.

The slag was separated from the obtained reduced melt to recover the alloy of nickel and cobalt.

### (Measurement of processing results)

The carbon dioxide (CO₂) emission amount discharged by executing the dry treatment process was calculated by estimating that the C not used in reduction among the carbon (C) supplied to the process was emitted as CO₂. In addition, the purity of the recovered alloy of nickel and cobalt (Ni-Co alloy) was measured by an ICP optical emission spectrometer (model ICP-OES Agilent 5900 manufactured by Agilent Technologies, Inc.). The measurement results are collectively shown in Table 1 below.

**[Table 1-1]**

| | Manufacture of starting material for dry smelting | | Starting material for dry smelting | | | CO₂ emission amount [m³/ (Ni+Co) t] | Alloy purity (Ni-Co/ total elements) [mass%] |
|---|---|---|---|---|---|---|---|
| | First classification point [µm] | Second classification point [µm] | Average particle size [µm] | C [mass%] | C/ (Ni+Co) | | |
| Example 1 | 75 | 30 | 285 | 9.1 | 0.93 | 355 | 96% |
| Example 2 | 75 | 40 | 310 | 6.0 | 0.60 | 229 | 96% |
| Example 3 | 75 | 25 | 270 | 13.5 | 1. 41 | 536 | 95% |
| Example 4 | 150 | 40 | 300 | 7.0 | 0.75 | 286 | 96% |
| Example 5 | 250 | 40 | 279 | 10.5 | 1.09 | 417 | 96% |

**[Table 1-2]**

| | | | | | | | |
|---|---|---|---|---|---|---|---|
| Example 6 | 75 | 45 | 320 | 4.5 | 0.45 | 173 | 96% |
| Example 7 | 250 | 25 | 255 | 21.0 | 2.00 | 770 | 95% |
| Comparative Example 1 | 400 | 40 | 214 | 28.8 | 3.74 | 1426 | 93% |
| Comparative Example 2 | 75 | 20 | 213 | 30.8 | 4.14 | 1579 | 92% |
| Comparative Example 3 | 75 | 10 | 196 | 32.8 | 4.86 | 1853 | 92% |

As shown in the results of Table 1, in Examples 1 to 7 prepared using starting materials for dry smelting in which the carbon (C) content is 25% by mass or less, and the ratio represented by C/(Ni+Co) is 2.5 or less, it was possible to obtain alloys of high purity of the valuable metals, and the carbon dioxide emission amount in this dry treatment process was effectively decreased.

In contrast, in Comparative Examples 1 to 3, due to using starting materials for dry smelting in which the carbon (C) content exceeds 25% by mass, and the ratio represented by C/(Ni+Co) exceeds 2.5, the carbon dioxide emission amount in the dry treatment process increased compared to the Examples. In addition, excessive reduction reaction in the dry treatment occurred so far as also reducing the impurity elements, a result of which the purity of the alloy decreased.

## Claims

1. A starting material for dry smelting comprising: at least one type of valuable metal among nickel (Ni) and cobalt (Co), and carbon (C),
wherein a C content is 25% by mass or less, and
C/(Ni+Co) is 2.5 or less.

2. The starting material for dry smelting according to claim 1, wherein an average particle size is 270 µm or more.

3. The starting material for dry smelting according to claim 1, wherein the C content is 15% by mass or less.

4. A method for producing the starting material for dry smelting according to claim 1, the method comprising:
a preparation step of preparing a starting material containing at least one valuable metal among nickel (Ni) and cobalt (Co), and carbon (C);
a first classification step of conducting classification on the starting material to divide into a coarse grain powder A₁ containing the valuable metal, and a fine grain powder A₂; and
a second classification step of conducting classification on the fine grain powder A₂ to divide into a coarse grain powder B₁ and a fine grain powder B₂,
wherein the coarse grain powder A₁ obtained from the first classification step, and the coarse grain powder B₁ obtained from the second classification step are recovered and established as the starting material for dry smelting.

5. The method for producing a starting material for dry smelting according to claim 4, wherein the first classification step conducts classification with a classification point of 50 µm to 250 µm.

6. The method for producing a starting material for dry smelting according to claim 5, wherein the second classification step conducts classification with a classification point of 25 µm or more.

7. A method for producing a valuable metal, the method producing the valuable metal or an alloy containing the valuable metal from a starting material for dry smelting containing valuable metal, the method comprising:
a reduction melting step of reduction melting the starting material for dry smelting,
wherein the starting material for dry smelting according to claim 1 is used as said starting material for dry smelting.

8. The method for producing a valuable metal according to claim 7, further comprising a raw material manufacturing step of manufacturing the starting material for dry smelting from a starting material containing valuable metal,
wherein the raw material manufacturing step manufactures the starting material for dry smelting by executing the method according to claim 4, and supplies the starting material for dry smelting thus obtained to the reduction melting step.

9. The method for producing valuable metal according to claim 7, wherein the starting material contains detoxified battery powder which is obtained by detoxifying a waste lithium ion battery by combusting, and pulverizing to a predetermined size.

10. The method for producing valuable metal according to claim 7, wherein the reduction melting step obtains a reduced melt containing slag and metal containing the valuable metal, by conducting a reduction melting treatment on the starting material for dry smelting in a melting furnace.

11. A method for producing nickel sulfate and/or cobalt sulfate using the starting material for dry smelting according to claim 1, the method comprising:
a dry treatment step of producing the valuable metal or an alloy containing the valuable metal by a dry treatment process using the starting material for dry smelting; and
a wet treatment step of producing nickel sulfate and/or cobalt sulfate through a wet treatment process including a leaching treatment using sulfuric acid, from the valuable metal or the alloy containing the valuable metal obtained in the dry treatment step.

12. The method for producing nickel sulfate and/or cobalt sulfate according to claim 11, wherein
the starting material for dry smelting contains nickel (Ni) and cobalt (Co), and
a mixed aqueous solution of nickel sulfate and cobalt sulfate is produced through the wet treatment process of the wet treatment step.

13. The method for producing nickel sulfate and/or cobalt sulfate according to claim 11, wherein
in the dry treatment step,
a reduced material containing slag and metal including the valuable metal is obtained by conducting reduction melting treatment on the starting material for dry smelting in a melting furnace, and
the valuable metal or an alloy containing the valuable metal is obtained by separating the slag from the reduced material.
